# EUROPEAN PATENT APPLICATION

(11) **EP 0 718 140 A1**
(43) Date of publication of application: **26.06.1996**
(21) Application number: 95120044.3
(22) Date of filing: 19.12.1995
(51) Int. Cl.: B60K 15/04

(54) **Vehicle fuel filler**

(30) Priority: 20.12.1994 IT TO941048
(71) Applicant: FIAT AUTO S.p.A., I-10135 Torino (IT)
(72) Inventor: Fiore, Nicola, Piazza Derna, 250 int. 10 (IT)
(74) Representative: Plebani, Rinaldo

(57) **Abstract**

A fuel filler presenting a sleeve (3) for receiving the end of the nozzle (1) of a fuel supply gun; and a tube (6) for connecting the sleeve (3) to the vehicle fuel tank (2); characterized in that it presents a fuel conduit (10) housed inside the tube (6) and in turn presenting a first end (11) connected to the sleeve (3) and a second end (12) terminating inside the tank (2); the outside diameter of the fuel conduit (10) being smaller than the inside diameter of the tube (6), so as to form, between the tube (6) and the conduit (10), an annular gap (13) of predetermined size.

## Description

The present invention relates to a vehicle fuel filler of the type comprising a sleeve for receiving the end of a fuel supply gun nozzle.

As is known, fillers of the above type also comprise a tube for connecting the sleeve to the fuel tank, and for directing the fuel supplied by the pump into the tank.

The inside diameter of the sleeve is considerably larger than the outside diameter of the supply gun nozzle to permit troublefree insertion of the nozzle inside the sleeve and allow the air inside the tank to be expelled as the fuel is pumped in; and the sleeve normally houses a flap pivoting between a first position wherein it closes the sleeve, and a second position into which it is pushed by the nozzle to open the sleeve.

Fuel fillers of the above type present several drawbacks.

In particular, when pumping the fuel into the tank, fuel flow along the tube connecting the sleeve to the tank is subject to distortion resulting in the formation of vapour, foam and minute drops of fuel. That is, since the inside diameter of the tube is much larger than the outside diameter of the jet from the supply nozzle, impact of the jet on the inside walls of the tube results in the formation of swirl in turn resulting in breakdown of the fuel into drops, vapour and foam, so that, with known fillers, fuel flow into the tank is frequently interrupted by the air expelled from the tank driving the drops back up to the nozzle and so activating the cut-off devices of the supply gun.

Moreover, known fillers of the above type normally feature a tube portion outside the tube connecting the sleeve to the tank, and which connects two appropriate portions of the tube to collect the vapour formed at the top of the tank and expel it from the top of the sleeve.

It is an object of the present invention to provide a vehicle fuel filler of the type briefly described above, designed to overcome the aforementioned drawbacks, and which in particular provides for smooth, uninterrupted fuel flow into the tank; for reducing the formation of foam and vapour and so reducing pollution; and for simplifying and reducing the size of current and future devices for reducing the vapour emitted when refueling.

According to the present invention, there is provided a vehicle fuel filler comprising a sleeve for receiving the end of the nozzle of a fuel supply gun; and a tube for connecting said sleeve to the fuel tank of the vehicle; characterized in that it comprises a fuel conduit housed coaxially inside said tube, and presenting a first end connected to said sleeve and a second end terminating inside the tank; the outside diameter of said fuel conduit being smaller than the inside diameter of said tube, so as to form, between the tube and the conduit, an annular gap of predetermined size by which to externally expel the air contained in the tank.

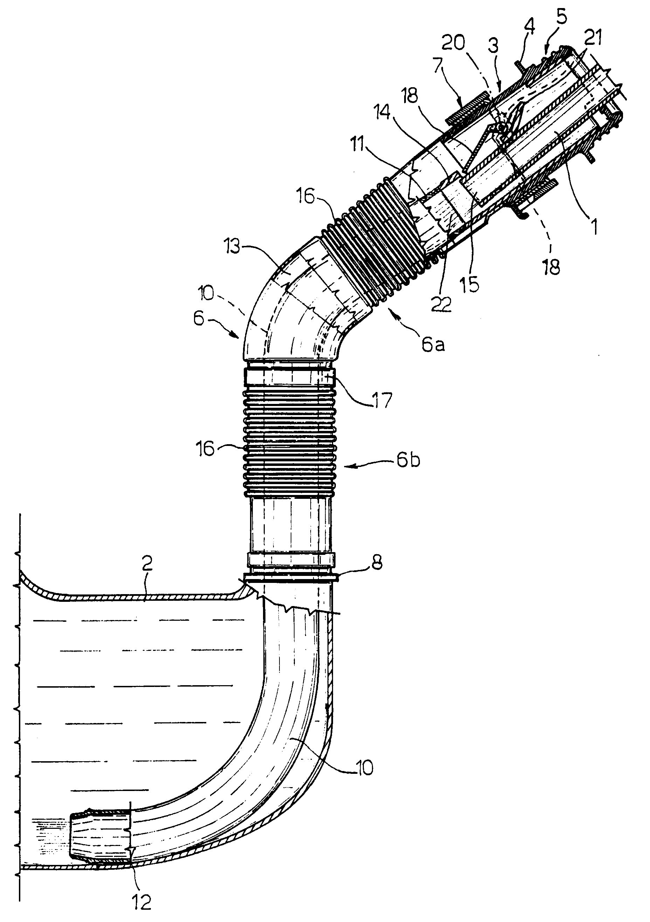

The present invention will be described in more detail with reference to the accompanying drawing showing a partially sectioned side view of the filler according to the invention.

The filler according to the invention provides for feeding fuel, supplied by the nozzle 1 of a supply gun (not shown), into the fuel tank 2 of the vehicle, and substantially comprises a sleeve 3 presenting a flange 4 for fitment to the vehicle body, and a threaded portion 5 to which the filler cap (not shown) is screwed.

The filler also comprises a tube 6 for connecting sleeve 3 to tank 2, and which is therefore connected at the top end to sleeve 3 in any convenient manner, e.g. by means of a clamp 7, and at the bottom end to wall 8 of the tank.

According to the present invention, the filler comprises a fuel conduit 10 housed inside tube 6, and which presents a first end 11 connected, as will be shown, to sleeve 3, and a second end 12 terminating inside tank 2 as shown clearly in the drawing. The outside diameter of conduit 10 is smaller than the inside diameter of tube 6, so as to form between the two an annular gap 13 which is so sized as to permit the air inside tank 2 to be expelled externally along gap 13 when fuel is pumped into the tank.

The filler also comprises an annular element 14 connected to sleeve 3 close to the bottom end of the sleeve, projecting axially in relation to the sleeve, as shown clearly in the drawing, and to which end 11 of conduit 10 is connected in any appropriate manner.

The inside diameter of annular element 14 is substantially equal to the outside diameter of supply nozzle 1, and element 14 is so positioned in relation to sleeve 3 as to permit the end 15 of nozzle 1 to fit inside element 14 with a predetermined radial clearance.

In the embodiment shown, annular element 14 is conveniently formed in one piece with sleeve 3.

Tube 6 may actually comprise two tube portions 6a, 6b connected to each other, and at least one of which, e.g. portion 6a, presents a curved portion. Both portions may present an annularly corrugated wall portion 16 for making them flexible and so permitting troublefree fitment of sleeve 3 to the vehicle body, and are conveniently connected to each other by a clamp 17.

Sleeve 3 conveniently houses a plate 18 pivoting about a hinge axis 20, and which is maintained, by elastic means not shown, in a first position (shown by the dotted line in the drawing) in which it substantially closes sleeve 3. When nozzle 1 is inserted inside sleeve 3, swivel plate 18 is pushed into a second position (shown in the drawing) in which it opens sleeve 3; and sleeve 3 may also conveniently house a deflecting tab 21 for guiding nozzle 1 as it is inserted inside sleeve 3.

The filler according to the invention operates as follows.

When nozzle 1 is inserted inside sleeve 3, end 15 fits partly inside annular element 14, i.e. as shown in the drawing; and the outside diameter of the fuel jet 22 issuing from nozzle 1 is substantially equal to the inside diameter of annular element 14 and the inside diameter of conduit 10 connected to element 14, so that jet 22 flows substantially laminarly along conduit 10 to tank 2. Inside conduit 10, no action occurs which might affect the flow direction of the fuel, so that flow remains substantially unchanged along the entire length of the conduit, and the fuel is fed into tank 2 extremely rapidly and with no formation of vapour, foam or drops. At the same time, the air inside tank 2 is expelled externally along gap 13 by the incoming fuel. Since gap 13 contains no fuel, the expelled air flows smoothly along gap 13 and out through sleeve 3, with no risk of minute drops of fuel being driven back to the supply gun.

The filler according to the present invention therefore provides for feeding the fuel smoothly and uninterruptedly into tank 2, by virtue of the fuel in conduit 10 never being cut off until the tank is full, and by preventing the formation inside conduit 10 of foam or fuel columns capable of activating automatic fuel supply cut-off devices. Moreover, the amount of vapour produced by the fuel is considerably reduced by providing two different conduits, one each for the fuel and air, and by preventing the formation of swirl in the fuel flow. Finally, an additional tube outside tube 6 is no longer required for conveying the vapour formed at the top of the tank to the top of tube 6, which vapour may be collected inside and expelled along gap 13. As such, the overall structure of the filler according to the invention is much simpler and more compact as compared with known fillers featuring an external tube for collecting the fuel vapour.

Clearly, changes may be made to the form and arrangement of the various parts of the embodiment described and illustrated herein without, however, departing from the scope of the present invention.

## Claims

1. A vehicle fuel filler comprising a sleeve (3) for receiving the end (15) of the nozzle (1) of a fuel supply gun; and a tube (6) for connecting said sleeve (3) to the fuel tank (2) of the vehicle; characterized in that it comprises a fuel conduit (10) housed coaxially inside said tube (6), and presenting a first end (11) connected to said sleeve (3) and a second end (12) terminating inside the tank (2); the outside diameter of said fuel conduit (10) being smaller than the inside diameter of said tube (6), so as to form, between the tube (6) and the conduit (10), an annular gap (13) of predetermined size by which to externally expel the air contained in the tank.

2. A fuel filler as claimed in Claim 1, characterized in that it comprises an annular element (14) connected to said sleeve (3), close to the bottom end of and projecting axially in relation to the sleeve (3); said first end (11) of the fuel conduit (10) being connected to said annular element (14); the inside diameter of said annular element (14) being substantially equal to the outside diameter of said nozzle (1); and said annular element (14) being so positioned in relation to said sleeve (3) as to permit the end (15) of said nozzle (1) to fit inside the annular element (14) with a predetermined radial clearance.

3. A fuel filler as claimed in Claim 2, characterized in that said annular element (14) is formed in one piece with said sleeve (3).

4. A fuel filler as claimed in one of the foregoing Claims, characterized in that said tube (6) comprises two portions (6a, 6b) connected to each other, and at least one (6a) of which presents a curved axis; the wall of each said tube portion (6a, 6b) presenting at least one annularly corrugated portion (16) to make the tube portions (6a, 6b) deformable.
